# EUROPEAN PATENT SPECIFICATION

(11) **EP 4 267 855 B1**
(45) Date of publication and mention of the grant of the patent: **19.03.2025**
(21) Application number: 21798382.4
(22) Date of filing: 22.10.2021
(51) Int. Cl.: F03G 3/00, F03B 7/00, F03B 13/14

(54) **ELECTRICAL POWER GENERATING SYSTEM**
SYSTEM ZUR ERZEUGUNG ELEKTRISCHER ENERGIE
SYSTÈME DE GÉNÉRATION D'ÉNERGIE ÉLECTRIQUE

(30) Priority: 22.10.2020 LU 102152; 22.10.2020 LU 102153; 22.10.2020 LU 102148
(43) Date of publication of application: 01.11.2023
(73) Proprietor: MAGGIOLI, Nicolas, 57100 Thionville (FR)
(72) Inventor: MAGGIOLI, Nicolas, 57100 Thionville (FR)
(74) Representative: Ipsilon Benelux
(86) International application number: PCT/EP2021/079319
(87) International publication number: WO 2022/084493

(56) References cited:
- WO-A1-2015/078097
- WO-A2-2008/111845
- WO-A2-2013/050343
- PT-A- 107 881
- US-A1- 2020 109 703

## Description

### Field of the invention

The present invention relates to an electrical power generating system, in particular to a kind of power generating system that uses a water power recovery device to recover potential energy from natural sources to generate electrical power.

### Background of the Invention

One of the main challenges against global warming in the current context of ever-increasing demand for electrical energy is the production of electricity without coal, gas or petrol. One alternative, *i.e*. windmills or solar cells, is weather-dependent, cannot produce electricity on demand, and can present a visual or acoustic nuisance. Another global-warming friendly technology, *i.e*. nuclear power, requires complex safety procedures and innovative waste treatment solutions. Most of these technologies are restricted to developed countries.

In an attempt to find a simpler way to produce electricity, the use of gravity has been investigated as for instance in the document EP 3 021 456 B1. This document shows an example of the use of buckets connected to an endless chain to generate electricity. This system is however poorly efficient as it requires the use of a plurality of electric forklifts to transfer objects to be stored in high elevation and to be retrieved for converting potential energy into electrical energy and especially when attempting to obtain a wide range of power output.

The document WO 2016/203227 A1 shows an example of the use of load cars to create electricity by means of gravity as they descend a slope and drive a generator. A mechanism regulates the inclination of the slope. This system is however poorly efficient as the energy required to orient the slope substantially equals the potential energy of the load car and the range of available power output is narrow. Document WO 2013/050343 A2 shows a system where a unique load is transferred at a time on a cart at a higher elevation to store potential energy, and back on a lower elevation to retrieve the stored energy. Document PT 107881 A shows carts falling in a vertical channel, whereby the fall creates an air flow that drives a turbine.

### Summary of the Invention

### Technical problem

In this context, the purpose of this invention is to solve the above-mentioned existing issues in current power-generating apparatuses. In particular, the invention aims at providing an electrical power generating system which does not produce CO₂, which can deliver electrical power on demand (*i.e*. store energy and retrieve it when needed), which is simple to implement (thus reliable and sustainable) and which demonstrates a high efficiency.

### Technical Solution

The invention relates to an electrical power generating system according to the subject-matter of claim 1, that among other technical features it comprises: an electrical generator coupled to a drum driven by a cable, and at least one load car travelling on rails between an upper position and a lower position under the action of gravity, wherein the drum, the cable and the load car are configured such that in its downward movement, the load car pulls the cable which rotates the drum by means of deviating pulley if required. The system further comprises: a plurality of unit loads configured for being loaded into, and unloaded from, the load car; a lifting subsystem for lifting unit loads; the subsystem comprising a water power recovery device and a charging car moved by the water power recovery device, the charging car being moved between a loading position where it receives unit loads from the load car in its lower position and an unloading position where it transfers the unit loads to the load car in its upper position.

The use of a plurality of unit loads allows to adjust the power delivered by the load car to the demand. The load car does not need to be fully loaded before it is released if only part of the nominal power of the system is required. The use of a plurality of unit loads allows higher force to be transferred to the drum compared to the direct potential energy recovered from the natural source.

The cable connecting the load car to the drum can be any kind of flexible link, such as a wire, a rope, a chain, a belt, etc. The drum can be adapted to the nature of cable and can be provided with teeth, grooves, or any other protrusion or recess to cooperate with the cable.

The load car can travel on a single rail, or on two or more rails. The load car is a semi-free weight in the sense that it mainly moves along one imposed direction and hence in one (curvilinear) dimension. The natural source of energy can also be semi-free weight, i.e. flowing in one main direction.

The rails supporting any device of the present invention are mechanical rails, magnetic rails or pneumatic cushion-like rails.

According to a preferred embodiment, the water power recovery device comprises an endless conveyor driving the charging car along a closed path.

According to a preferred embodiment, the power recovery device is a water power recovery device comprising at least one watermill driven by a water flow and powering the endless conveyor.

The wording "water flow" is used here to mean any kind of precipitation or river-like flow: rain water, snow, hail, river or lake derivation, etc. Such water flows are an advantageous natural resource which can be abundant at times and can be easily marshalled. It does not require particular handling restrictions as it is neither dangerous for human nor for nature.

According to a preferred embodiment, the power recovery device further comprises: at least one shaft linking the watermill to the endless conveyor; at least one gearbox arranged between the watermill and the shaft.

According to a preferred embodiment, the water power recovery device comprises a tidal generator powering the endless conveyor, said tidal generator comprises: a buoy adapted to float on water; a guide, for example a pillar, for guiding the buoy in a vectorial movement, preferably a vertical movement; a cable linked to the buoy and driving a cog freewheel; the cog freewheel driving the endless conveyor via a shaft.

According to a preferred embodiment, the tidal generator comprises a plurality of buoys with their respective cog freewheel arranged in parallel to drive a common shaft.

According to a preferred embodiment, the charging car moves up and down along a finite path and the water power recovery device comprises: a bucket travelling between a filling position and an emptying position under the sole action of gravity; a cable connecting the bucket to the charging car; a pulley winding the cable, the pulley and the cable being arranged such that the bucket is in its emptying position when the charging car is in the unloading position and such that the bucket is in its filling position when the charging car is in the loading position.

According to a preferred embodiment, the water power recovery device comprises a water receiving surface gathering / directing water from a water flow into an intermediate buffer hopper, and a valve adapted to be open when the bucket is in its filling position, so as to fill the bucket with water contained in the hopper.

Using a hopper enables to still accumulate water while the charging car is away from the water source. The hopper acts then as a buffer.

According to a preferred embodiment, the water power recovery device further comprises: an exhaust pipe situated below the emptying position and a drain device implemented at the bottom of the bucket, wherein the drain device is adapted to drain the water out of the bucket and into the exhaust pipe when the bucket is in its emptying position.

A fully automated emptying and filling of the bucket avoids this part of the system to consume any energy. The water drained out of the bucket can be further used since its quality has not been altered by its travel through the bucket and/or hopper.

According to a preferred embodiment, the electrical power generating system of this invention further comprises at least one buffer for unit loads, the buffer being equipped with releasable stoppers for allowing or preventing movement of the unit loads, wherein moving the unit loads from the load car in its lower position into the charging car in its loading position and/or moving the unit loads from the charging car in its unloading position into the load car in its upper position is operated by gravity in the buffer, or on mechanical rails, or on magnetic rails, or on pneumatical rails.

The use of a buffer enables to build progressively, with smaller amount of (elementary) force recovered from nature, a greater potential energy, which can be used on demand by letting the load car drive down.

According to the invention, the charging car is supported by mechanical, magnetic or pneumatical rails having a deviating portion making the charging car tilt nearby the unloading position, such as to allow unit loads to be transferred to the load car, potentially via a buffer without consuming energy.

The unit loads may then be mechanically automatically transferred to the load car.

According to a preferred embodiment, the rails supporting the charging car comprise a pair of inner rails and a pair of outer rails; and the charging car comprises two front wheels supported by the inner rails and two rear wheels supported by the outer rails or by both inner and outer rails, wherein in the deviation portion, the outer rails deviate from the inner rails so as to tilt the charging car.

According to the invention, the load car is supported by mechanical, magnetic or pneumatical rails having a deviating portion making the load car tilt nearby the lower position, such as to allow unit loads to be transferred to the charging car, potentially via a buffer.

According to a preferred embodiment, the rails supporting the load car comprise a pair of inner rails and a pair of outer rails; and the load car comprises two front wheels supported by the inner rails and two rear wheels supported the outer rails or by both inner and outer rails, wherein in the deviation portion, the inner rails deviate from the outer rails so as to tilt the load car.

According to a preferred embodiment, the electrical power generating system and the water power recovery device comprise a steel structure gallery comprising superposed rail tracks disposed on three levels for supporting the motion of the load car, the charging car and potentially the bucket.

This design is particularly compact, reliable, simple to manufacture or assemble, and requires little maintenance. Depending on the design and destination, it can be sustainable for at least 20 to 50 years.

According to a preferred embodiment, the load car is a first load car, and the system comprises a second load car, the first and second load cars operating in phase opposition both being mobile between their respective upper and lower positions, and optionally the system comprises further pairs of load cars operating in phase opposition. One being lifted while the other is in it downwards position with a plurality of unit loads.

This allows to provide a double electrical generating system in a single system, using some common structural parts. This allows positioning of empty load car without consuming energy.

According to a preferred embodiment, the first and second load cars and optionally the further pairs of load cars are coupled to a common drum by means of two respective cables or one common cable.

According to a preferred embodiment, the unit load is substantially parallelepipedal or substantially cylindrical or substantially ball-shaped and is optionally provided with bearings or wheels.

The invention also relates to a method for generating electrical power by means of one of the systems presented above. The method comprises: holding an empty load car in an upper position, raising at least one unit load in a charging car moved upwards up to an unloading position wherein at least one unit load is being unloaded from the charging car into the load car or into a buffer where the at least one unit load is retained; optionally moving the empty charging car into a loading position, loading the charging car with at least one further unit load and repeating the steps of raising and unloading as above; releasing the unit loads from the optional buffer into the load car; releasing the load car so as to let it travel downwards by the action of gravity; pulling, by means of the movement of the load car, a cable; rotating a drum by means of the movement of the cable; driving an electrical generator coupled to the drum.

The load car can but does not necessarily need to be held in its upper position before the charging car starts to lift unit loads.

In a preferred embodiment, the step of raising at least one unit load happens in accordance with the water power delivered and the step of releasing the load car is performed on demand and independently from the step of raising at least one unit load.

### Advantages of the invention

Further to the benefits already mentioned above, the present invention does not degrade the landscape, does not produce noise or disturbances for birds, contrary to windmills for instance. Also, while a dam or a power plant may have major impact on site (e.g. risk of flooding of a valley, destruction of biodiversity, etc.), the system of this invention has a light footprint and is adaptable to any location with minimum geographical impact. The invention can indeed be implemented in various sites: offshore, mainland field, mountains, cities, major transportations, buildings, hot/cold weather climates, etc. It can be implemented in off-grid network areas such as mountains, third world country, forest, desert, underground facilities, etc. As it works mechanically, it is resilient to any remote hacking attempt.

While existing renewable energy facilities are producing power without any storing capability (except dams), the present invention can store and defer the use of energy on demand and without delay: in contrast, although nuclear power plants or dams can produce power on demand, it can take several minutes until the desired power is delivered and these two technologies thus require a meticulous planning ahead of the highest demand periods.

The system of the invention is furthermore advantageous as it does not produce any emission, be it radio-active, chemical or biological.

The overall construction of the invention is simple and easy to maintain, easy to assemble or disassemble with conventional tools.

The invention is also flexible as the amount of power delivered can be controlled, as well as its duration.

The invention can be implemented at a small scale (a house, a building) as well as at a larger scale (several systems in series or in parallel on a mountain, river). The spectrum of energy produced is therefore very broad, from a few kW to a few of MW.

Finally, a quick return on investment can be expected as the system does not require any consumable in order to generate electricity.

### Brief description of the figures

Figure 1 is a side view of part of an electrical power generating system of the invention, presenting the unit load, the charging car the load car and their respective rails tracks system.
Figure 2 presents the view A and the view B of the electrical power generating system of figure 1, depicting the front and rear wheels.
Figure 3 shows two sectional views I-I and I'-I' of figure 1.
Figure 4 is an isometric view of a load car, a charging car and a unit load, which may be used in the invention.
Figures 5-15 illustrate an exemplary chronology of the various steps of the working process of the electrical power generating system of the invention.
Figure 16 illustrates a cross-sectional view XV-XV with two intersecting planes defined on figure 13.
Figure 17 shows an embodiment of the invention with two load cars operating in phase opposition.
Figures 18-21 show an example not forming part of the claimed invention wherein the driving device is powered by means of a land vehicle.
Figures 22 and 23 show an example not forming part of the claimed invention wherein the driving device is powered by means of a vessel.
Figures 24 and 25 shows an embodiment according to the invention wherein the driving device is powered by a water flow.
Figure 26 depicts a supporting structure according to the invention.
Figure 27 shows an embodiment wherein the charging cars travel along a closed path.
Figure 28 depicts a possible embodiment for the supporting structure.
Figures 29-31 illustrate a speed bump which can be used to power the system in an example not forming part of the claimed invention.
Figure 32A is an isometric partial view of the system of the example driven by the energy recovered from speed bumps. Figure 32B is a partial top view.
Figures 33 and 34 show two steps of the process where the charging cars travel along a closed path.
Figures 35-38 show an embodiment wherein the system is driven by one or more tidal generators.
Figures 39-42 show alternative embodiments of the system.

### Detailed description of exemplary embodiments of the invention

The figures present the invention in a schematic manner. In particular, the relative dimensions of the elements are not represented true to scale. The same reference number is used for the same or equivalent component throughout the various embodiments.

The electrical power generating system 30 of the invention can work with two alternative solutions marked subsystem 40 and subsystem 41.

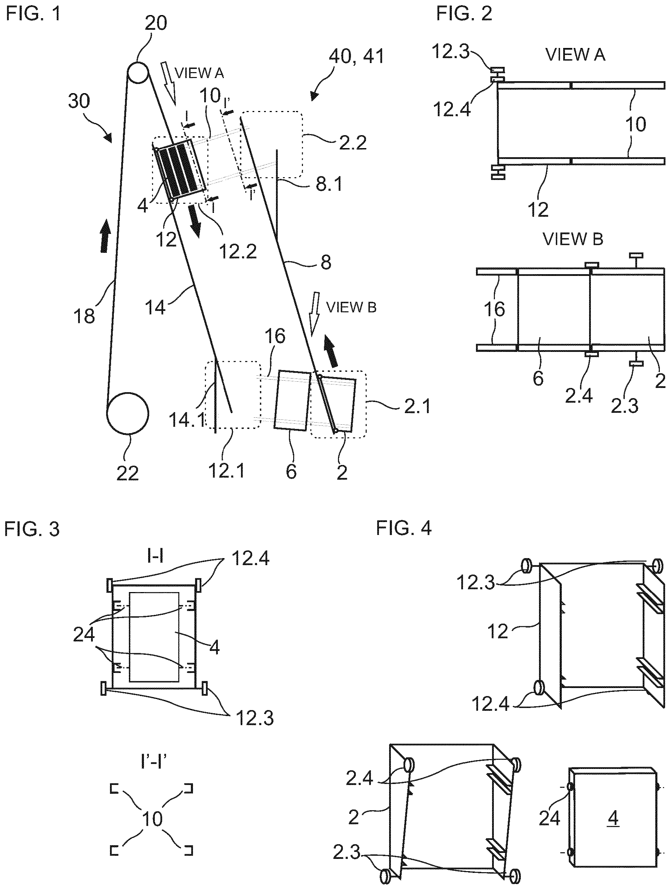

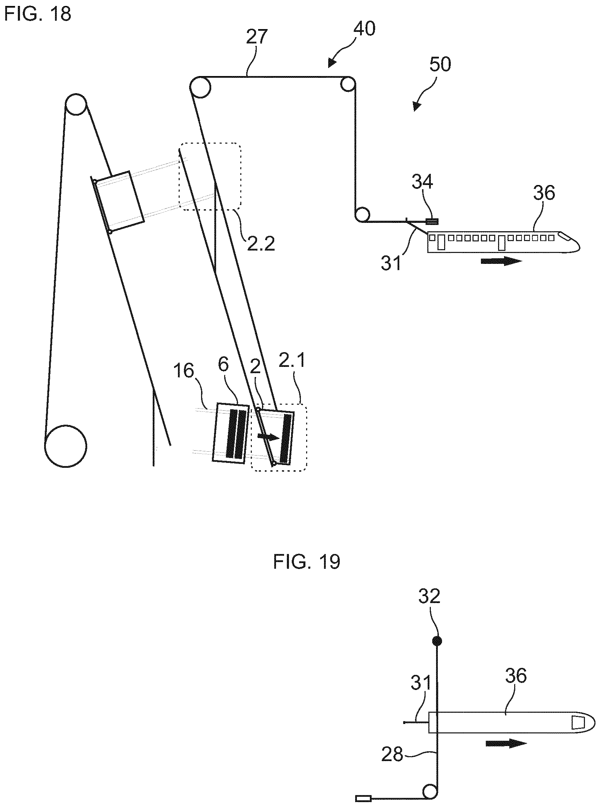

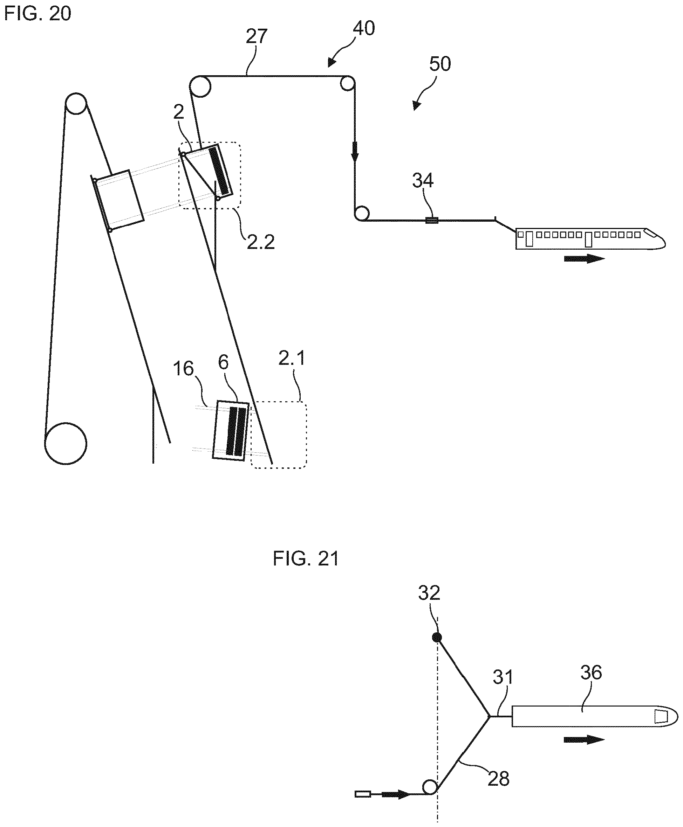

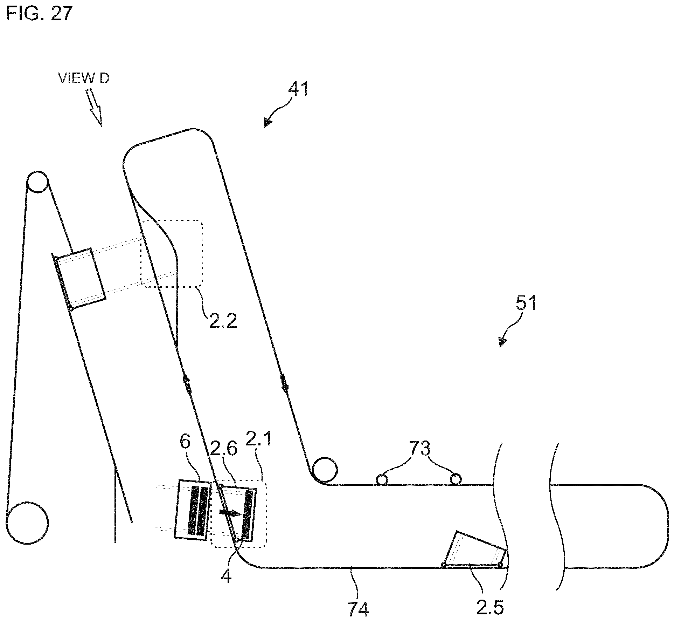

While figures 1 to 17 present the portion of the system 30 that is common to both alternative solutions, figures 18 to 26 show embodiments of the subsystem 40 and figures 27 to 38 show embodiments of the subsystem 41.

As shown on figure 1, the electrical power generating system 30 comprises a charging car 2 adapted to carry a plurality of unit loads 4. The charging car 2 transfers unit loads 4 from a loading position 2.1 nearby an optional buffer 6 onto rails 8 and up to an unloading position 2.2 where the unit loads 4 are unloaded onto transfer rails 10. The transfer rails 10 can accumulate the unit loads as a buffer and transfer them into a load car 12. On figure 1, the unit loads 4 have been transferred to the load car 12 and the charging car 2 is empty and has come back by gravity into its loading position 2.1. On demand, the load car 12 is released and moves along rails 14 from an upper position 12.2 down to a lower position 12.1, where it delivers the unit loads 4 to transfer rails 16.

Rails 8, 10, 14 and 16 can be train-like rails or magnetic rails or air-cushion supports, or any equivalent.

The load car 12 can be maintained in position by any mechanical, pneumatical or magnetic means, such as a stopper (pin, lever, etc.) interfering with its movement and counter-acting the force of gravity. Under electromechanical, pneumatic or magnetic actuation, the stopper can be removed from a state where it interferes with the path of the load car 12 into a state where it does not. Actuation is made on demand, for instance automatically when a command to produce energy is received by a controller, or is actuated by an operator.

In its downwards movement, the load car 12 pulls a cable 18 around a pulley 20 and drives a drum 22 in rotation.

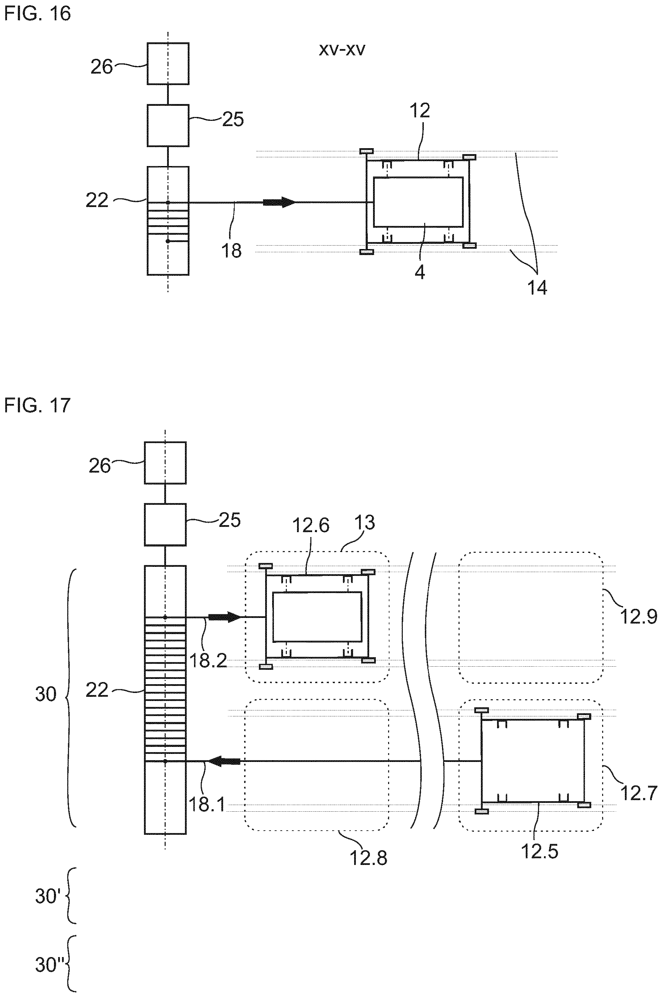

The drum 22 is coupled to an electric generator (26 on figures 16, 17) directly connected to the drum or connected to the drum via a clutch or a gearbox (25 on figures 16, 17) to transform mechanical energy into electrical energy.

The charging car 2 is part of a lifting subsystem 40 whose purpose is to retrieve unit loads 4 at a low altitude and raise the unit loads 4 at a higher altitude.

Rails 8 and rails 14 may both comprise a respective deviation portion with deviating rails 8.1, 14.1, so as to pivot the charging car 2 and the load car 12 nearby their respective positions where the unit loads are unloaded (*i.e*. lower position 12.1 for the load car 12 and unloading position 2.2 for the charging car 2). The deviating rails can pivot the cars of an angle of 30°.

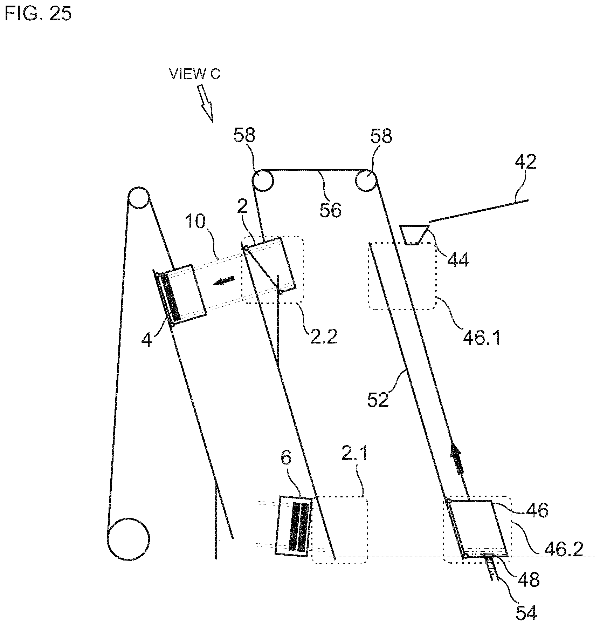

To that end, and as shown on figures 2 to 4, the charging car 2 and the load car 12 may both comprise two rear wheels 2.3, 12.3 and two front wheels 2.4, 12.4. The rear wheels 2.3, 12.3 define a wheel track larger than that of the front wheels 2.4, 12.4. The rails 8, 14 can thus be made of two pairs of rails in the deviating portion, one of the pair (*i.e*. the pair supporting the rear wheels 2.3 of the charging car 2 and the pair supporting the front wheels 12.4) diverging so as to pivot the load car/charging car. The inner rails are noted 8.2, 14.2 on fig. 25 and the outer rails are noted 8.3, 14.3 on fig. 25. The diverging pairs are rails 8.3, 14.2.

As shown in figure 3, each unit load 4 may comprise side rollers 24 or equivalent feature so as to engage and slide along appropriate features (*e.g*. rails, runners) of the charging car 2 or load car 12, as well as in the buffer 6 or along the transfer rails 10 and 16.

The transfer rails 10 are set between the charging car 2 in its unloading position 2.2 and the load car 12 in its upper position 12.2; the rails enable the transfer of each unit load 4 into the load car 12.

The transfer rails 16 are set between the charging car 2 in its loading position 2.1 and the load car 12 in its lower position 12.1; the rails enable the transfer of each unit load 4 into the potential buffer 6, or into the charging car 2.

The buffer 6 works as an intermediate storage of the unit loads 4 with integrated releasable stoppers (not shown); enabling the transfer of the unit loads 4 one by one into the charging car 2. For instance, when the charging car reaches its loading position 2.1, it may contact a device (mechanical like lever, or electrical like limit switch) which pivots and mechanically automatically releases the content of the buffer 6.

The charging car 2 may receive one or more unit loads 4 at a time sliding out of the buffer 6. Unit loads 4 are released either one by one from the buffer 6 or as a batch. This distinction may depend on the natural energy capacity.

The cable 18 is linked to the load car 12 and connected to the drum 22.

The pulley 20 which winds the cable 18 is optional and the drum 22 could be positioned in a higher elevation and directly connected to the cable 18 and the load car 12.

Once loaded, the charging car 2 is then lifted to its unloading position 2.2 by means of a driving device, which is a water power recovery device (see 50 on figures 18 ff.). Nearby the unloading position 2.2, the deviating portion 8.1 makes the charging car 2 tilt such as to allow each unit load 4 to be transferred to the load car 12 by sliding along the transfer rails 10. This operation is repeated and unit loads 4 are packed in the load car 12 until said load car reaches its maximum capacity, (*i.e*. total weight of the load car 12 added to all the packed unit loads 4 enables the load car to counter the resistant effort of the electrical generator, the weight of an optional counterweight, or the weight of an empty second load car (see fig. 16).

Then the load car 12 is released to slide on the rails 14 until reaching its lower position 12.1, whereby the deviating rails 14.1 supporting the front wheels 12.4 of the load car 12 make it tilt. This allows all the unit loads 4 to be transferred to the buffer 6 by sliding along the transfer rails 16. Once all the unit loads 4 are positioned in the buffer 6, the load car 12 slides back up to its upper position 12.4 as its weight becomes insufficient to maintain it in its lower position 12.1.

The cable 18 is pulled while the load car 12 is travelling downwards, causing the cable to rotate the drum 22 which is driving an electrical generator 26.

The load car 12 is released on demand when electrical power needs to be generated. Along rails 14, the load car 12 may encounter intermediate bumpers (stopper and/or shock absorber) so as to limit the power that is produced or the duration of production. From this intermediate position, the load car 12 may be later on released again, to keep on moving downwards and produce electrical energy. By adjusting the number of unit loads loaded in the load car and/or the distance travelled by the load car, a discrete and precise control of the energy generated can be managed, both in intensity and duration.

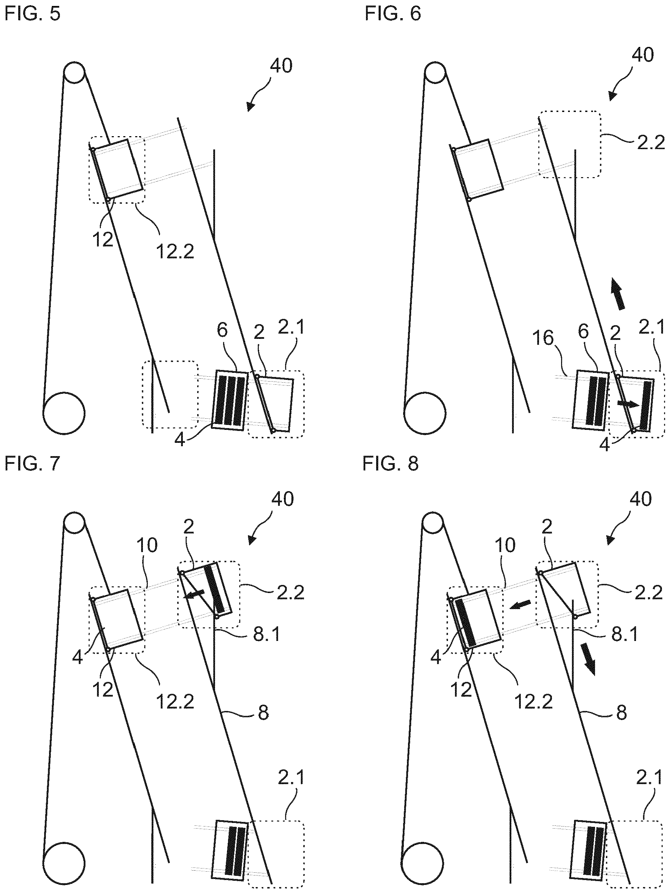

Figures 5 to 15 describe further details of the process explained above.

In a first configuration shown in figure 5, the buffer 6 is fully loaded with unit loads 4, the empty charging car 2 is in its loading position 2.1 and the empty load car 12 may be in its upper position 12.2 (it can also be at any other position).

Figure 6 presents the next working process step in which the charging car 2 in its loading position 2.1 has received one unit load 4 (or a subgroup of the total unit loads, or all unit loads) sliding out of the buffer 6. The charging car 2 is ready to be lifted up by the water power recovery device (noted 50 in figures 18 ff.) up to its unloading position 2.2.

As shown in figure 7, nearby the unloading position 2.2, the deviating portion 8.1 makes the charging car 2 tilt so as to enable the unit load 4 to slide by the sole action of gravity onto the transfer rails 10. The unit loads 4 may remain on the transfer rails 10 acting as a buffer similarly to buffer 6 (for instance if the load car 12 is not present in its upper position 12.2). The unit loads may also be immediately transferred into the load car 12. Figure 8 shows that once the charging car 2 is emptied, it will go down to its loading position 2.1 sliding on the rails 8 by means of the water power recovery device (50 on figure 18 ff.) or by gravity.

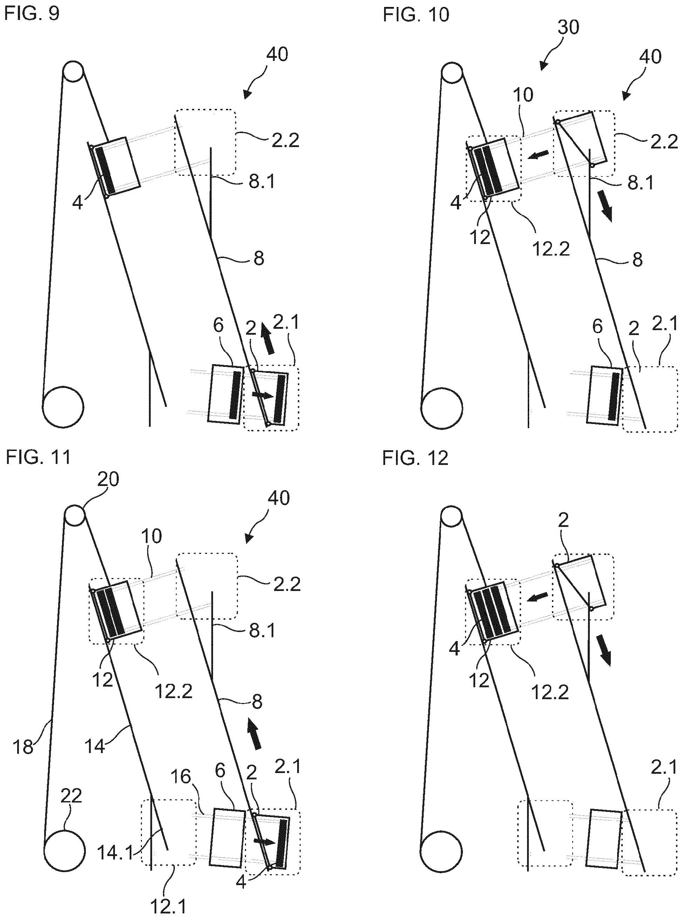

Figures 9 to 12 show the successive steps which in essence repeat the steps already mentioned. The charging car 2 may then lift up progressively the unit loads 4 and transfer them into the load car 12. In this example, for reasons of simplification, only three unit loads are shown.

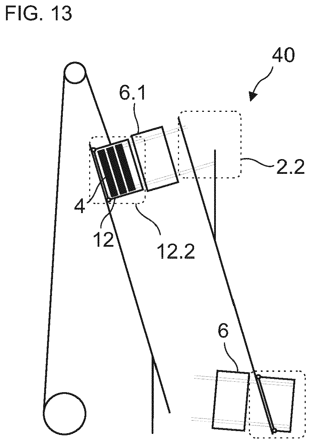

Figure 13 materializes an optional buffer 6.1 positioned between the unloading position 2.2 and the upper position 12.2. The buffers 6, 6.1 enable the subsystem 40 to run continuously without waiting for the load car 12 to be completely empty before lifting up the unit loads 4, and without waiting for the load car 12 to be back to its upper position 12.2 before unloading the charging car 2.

On figure 13, the charging car 2 is shown in its loading position, but it is not necessary for the charging car 2 to be brought down before releasing the load car 12.

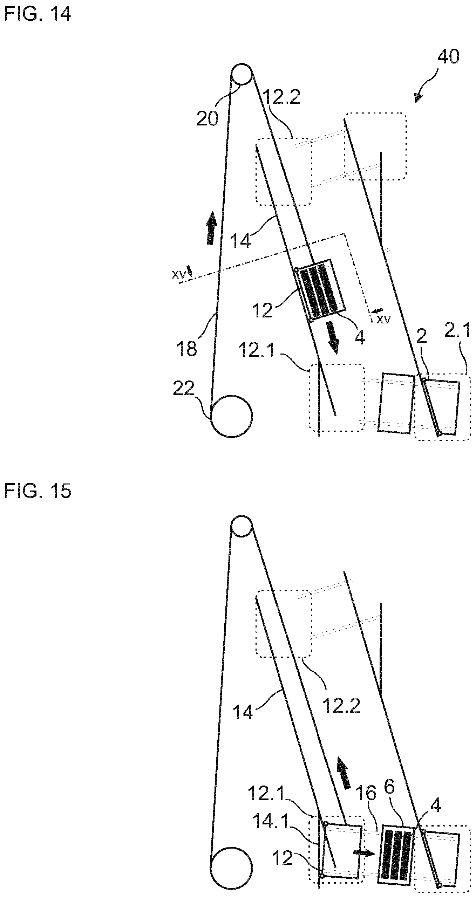

Figure 14 presents the next process step whereby the load car 12 has been released from its upper position 12.2 sliding down on the rails 14 by means of the sole action of gravity.

Figure 15 presents the last process step before returning to the step of fig. 5. The load car 12 has finished its descent on the rails 14 and is positioned in its lower position 12.1. Nearby the lower position 12.1, the deviating portion 14.1 made the load car 12 tilt so as to enable the unit loads 4 to slide on the transfer rails 16 into the buffer 6. Once the load car 12 is empty, it may go back to its upper position 12.2 ready to gather again the unit loads 4 one by one. As its upward movement may depend from the downwards movement of another load car (see fig. 16), the load car 12 may remain in its lower position for a little while.

As shown in figure 16 and figure 17, the load car 12 loaded with the unit loads 4 descends and pulls the cable 18 which is winded by the pulley 20 (not shown). The cable is directly linked to the drum 22 which engages the rotation of the generator 26. In the example of figure 17, two load cars 12.5, 12.6 are mounted on the same drum attached to respective cables 18.1, 18.2 (or to a common cable). When one of the load cars travels downwards, the other travels upward. The electrical power generating system 30 can be complemented with other similar systems 30', 30" in series along the drum axis. This allows to continuously rotate the generator.

The load cars 12.5, 12.6 can thus operate in phase opposition, by translating between their respective upper positions 12.8, 13 and their respective lower positions 12.7, 12.9 (see fig. 16).

Figures 18 to 23 illustrate various examples not forming part of the claimed invention for a driving device 50 that ensures the function of lifting up the charging car 2.

In a first example as depicted on figures 18 to 21, the charging car 2 are pulled up by means of a cable 27. The cable 27 may be attached to, or integral with an arresting cable 28. The arresting cable 28 may be arranged horizontally above (or below) a vehicle pathway, so as to cooperate with a tailhook 31 attached to a land vehicle 36, *e.g*. a train.

The arresting cable 28 is pulled by the tailhook 31 when a vehicle is decelerating (*e.g.* when entering a station).

The arresting cable 28 is fixed at one of its ends 32 and is attached to the charging car 2 at its other end.

The cable 28 can wind around further pulley(s) 34.

As shown in the figure 18, when the train 36 approaches a station or a zone where it needs to reduce its speed, its tailhook 31 grabs the arresting cable 28. The charging car 2 which has received a unit load 4 is consequently lifted to its unloading position 2.2.

The tailhook 31 can be positioned on the upper or the lower part of the train (below the track). The overall design and the surroundings dictate the arrangement of the arresting cable 28.

Once the tension force is not required anymore on cable 28, an appropriate mechanism (not shown) releases the tailhook 31 from the arresting cable 28. An appropriate stopper can be provided to maintain the charging car in its unloading position 2.2 even after the cable 28 is released, so as to allow an independent releasing of the tailhook 31 from the cable 28 from the unloading of the unit loads 4 off the charging car 2.

The tailhook mechanism can be provided with a clutch, safety means, force limiting means, elastic means, etc., so as to ensure that no damage is done to the vehicle; to the cable or to the tailhook under inappropriate braking force. Also, predetermined breaking points can be foreseen so as to ensure that under forces exceeding a threshold, the cable or the tailhook breaks at appropriate convenient location.

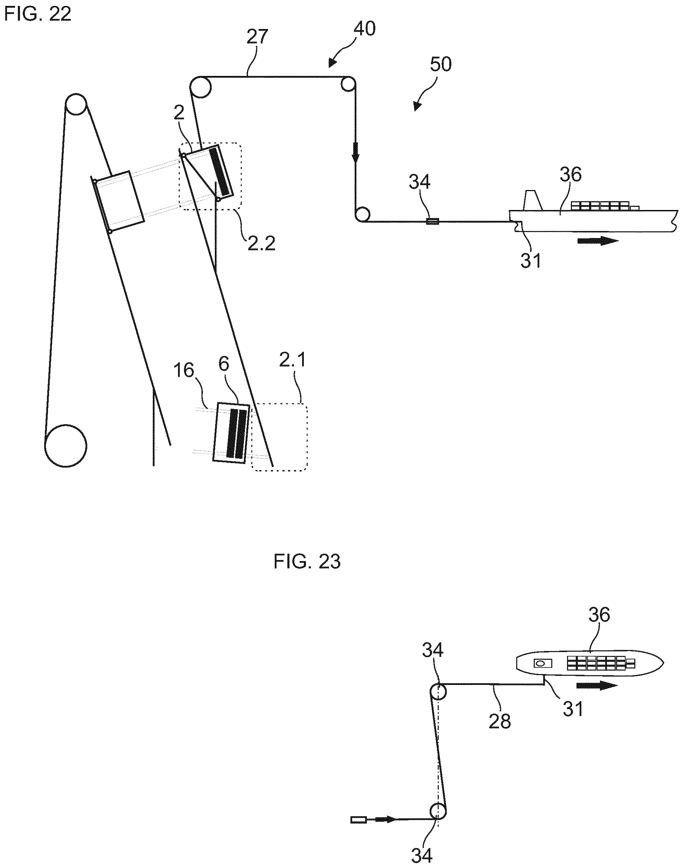

Alternatively, any kind of land or water vehicle can be used. Figure 22 shows how a vessel 36 approaching a pier can be used. The vessel can be provided with a tailhook 31 grabbing an arresting cable 28. The tailhook 31 of the vessel 36 can be positioned sideways or underneath the vessel 36. Similarly to the example with the train above, an appropriate releasing mechanism can be foreseen.

Although the two examples above show a "mechanical" engagement embodied by the tailhook grabbing an arresting cable, similar effect can be obtained with a magnetic cooperation, between a boarded magnet arranged on the moving vehicle and a local magnet of opposing pole arranged in the vicinity of the zone where the vehicle needs to stop. Thus, the local magnet can be driven along a guide and can pull the charging car by means of appropriate mechanical connection.

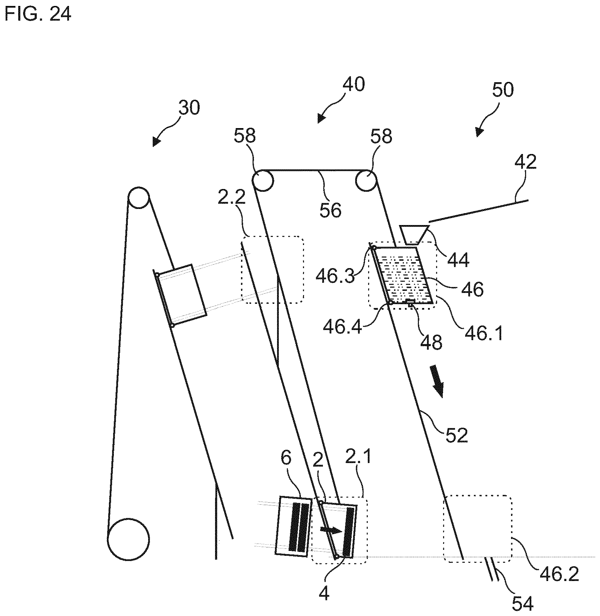

In an embodiment according to the claimed invention presented on figures 24 to 26, the driving device 50 uses energy from a water flow.

The driving device 50 may comprise a receiving surface 42 aiming at gathering and focusing water into a hopper 44 serving as an intermediate buffer or aiming at conducting water directly into a bucket 46. Any water flow can be redirected onto the receiving surface 42 (rain water, snow, hail, river, etc.).

The receiving surface 42 may be made out of glass, metal or plastic sheets or equivalent and can be supported by a light structure (not shown).

The receiving surface 42 may be part of the roof of a building or as part of a natural (hill, mountain) landscape.

The bucket 46 may slide on rails 52. The bucket can translate between a filling position 46.1 and an emptying position 46.2 guided by its wheels 46.3, 46.4. In its filling position 46.1, the bucket 46 is filled with water directly from the surface 42, or from the hopper 44. A valve (not shown) enables the hopper 44 to deliver water to the bucket 46 when the latter is in its filling position 46.1. The valve may be automatically open when the bucket is or arrives in its filling position 46.1. The valves can be mechanically or electrically actuated.

When the bucket is heavier than the charging car 2 (loaded with one or more unit loads), the bucket 46 moves downwards by the action of gravity and lifts up the charging car 2 by means of the cable 56 winded around pulleys 58. Appropriate control and/or stopper may be provided to maintain the charging car 2 in its loading position 2.1 until it is loaded with a unit load, and counter-acting the pulling action of a full bucket 46.

The charging car 2 reaches its unloading position 2.2 when the bucket 46 reaches its emptying position 46.2. Similarly, the bucket 46 is in its filling position 46.1 when the charging car 2 is in its loading position 2.1.

Figure 25 shows the bucket in its emptying position 46.2. A drain device 48 is implemented in the bottom of the bucket 46 and enables the water to be evacuated when the bucket 46 reaches its emptying position 46.2. The drain device 48 operates as a valve. It contacts an exhaust pipe 54 which evacuates the water contained in the bucket 46 until the bucket has become lighter than the charging car 2. The empty charging car 2 (*i.e.* not loaded with any unit load 4) is heavier than the empty bucket 46. Once the bucket 46 is emptied enough, the charging car 2 gets back down, pulling the cable 56 and the bucket 46 back in its filling position 46.1 to be filled again with water. The drain device can be mechanically or electrically actuated.

In an embodiment, multiple water hoppers may be used and a tilting runner (not shown) can be placed between the receiving surface 42 and the hoppers or between the buffer and the hopper, to regulate the flow and store adequately water in the various hoppers. Respective buckets will then be provided to cooperate with the hoppers.

The driving device 50 of figures 24 to 26 may be implemented in a city or in a natural landscape (*e.g*. mountains, cliffs or hills).

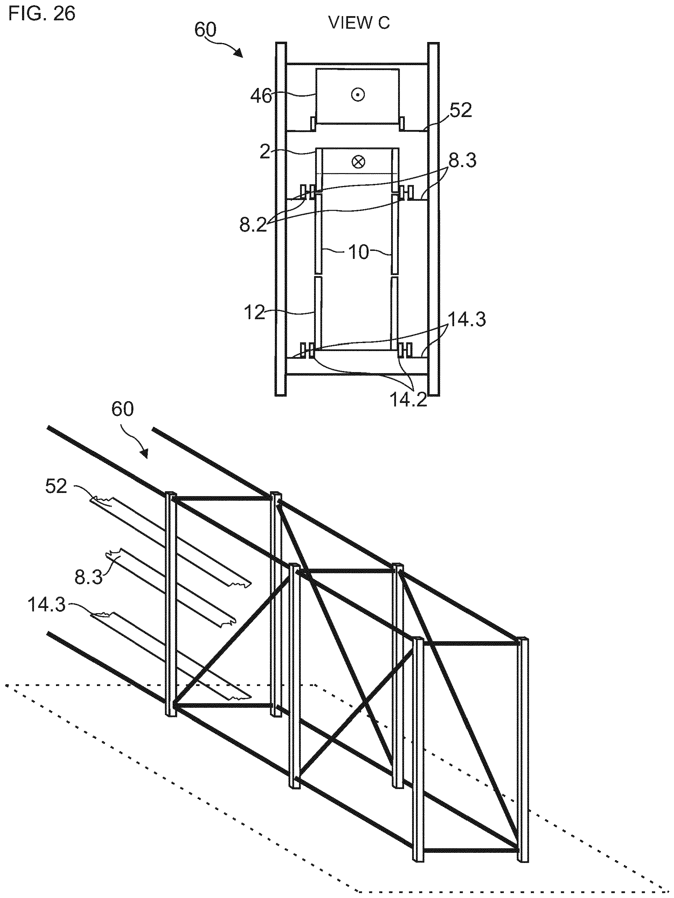

Figure 26 shows a cross-section of the structure 60 and also an isometric view of the structure 60 where one can see that the rails 8 which support the charging car 2 comprise in the deviating portion a pair of inner rails 8.2 and a pair of outer rails 8.3. The front wheels 2.4 of the charging car 2 are supported by the inner rails 8.2 and the rear wheels 2.3 are supported by the outer rails 8.3, wherein in the deviation portion 8.1, the outer rails 8.3 deviate from the inner rails 8.2 so as to tilt the charging car 2. Similarly, the rails 14 comprise a pair of inner rails 14.2 supporting the front wheels 12.4 of the load car 12 and a pair of outer rails 14.3 supporting the rear wheels 12.3 of the load car. The inner rails 14.2 deviate to tilt the load car 12 nearby the lower position.

For safety reason, the structure 60 may be made of modules (for instance one module is represented on figure 26). The structure 60 may be made of vertical pillars and steel trestle. The structure 60 may alternatively be made of wood or any other suitable material.

The structure 60 may be protected by a grid to prevent the load cars or charging cars from hitting an obstacle (people, animal, etc.) when travelling in the structure 60.

Figure 27 shows a further embodiment of a lifting subsystem 41, wherein a plurality of charging cars (2.5, 2.6) may be provided. The charging car(s) travel(s) along a closed path (*i.e.* a carrousel). The charging car(s) 2 is/are moved by a driving device 51 which comprises an endless conveyor 74 driven by one or more gears 73. The endless conveyor 74 drives the charging car(s) 2 along a closed path which passes through the loading position 2.1 and the unloading position 2.2.

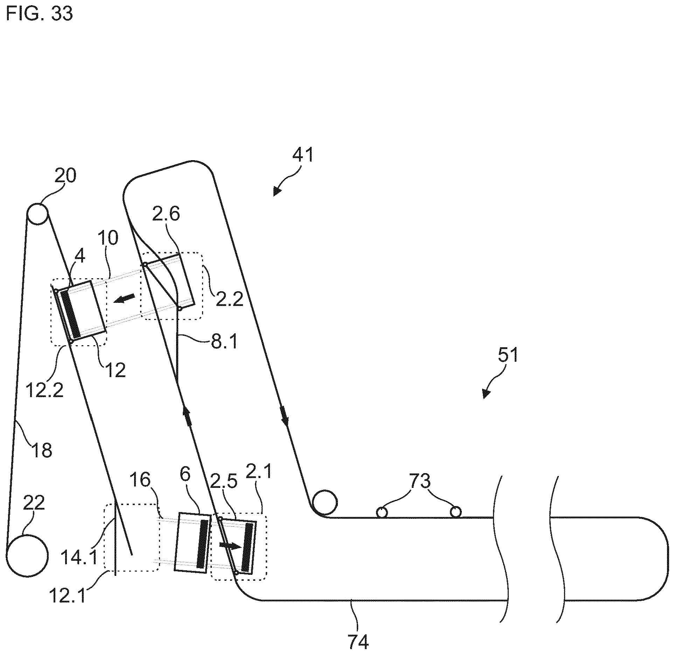

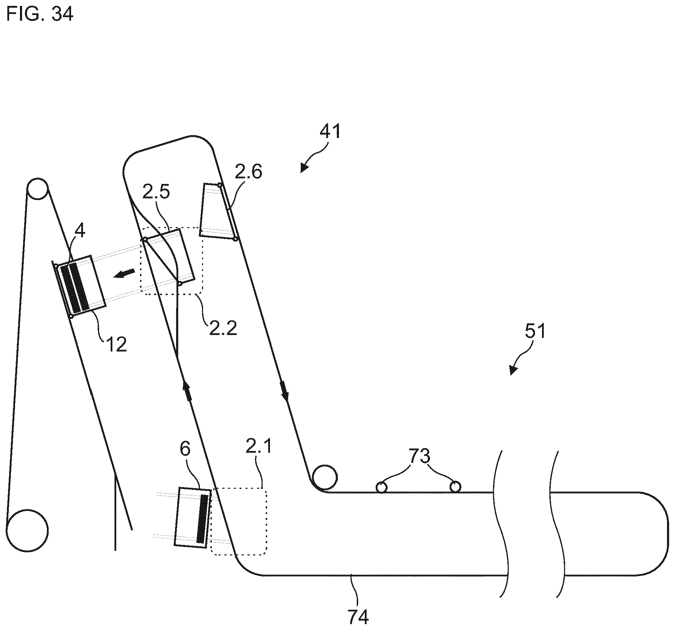

The process to generate electrical energy is substantially similar to the examples of figures 18 to 26: unit loads 4 are loaded into the charging cars (2.5, 2.6) at the loading position 2.1 and unloaded at the unloading position 2.2. A load car receives the unit loads and moves downwards while pulling a cable and driving a drum in rotation. In this embodiment however, the charging car(s) travel(s) in a closed path. Figures 33 and 34 illustrate two such steps of the process.

Using several charging cars prevents from the need to wait for a single charging car to be emptied and returned to its loading position.

The charging cars (2.5, 2.6) may be fixed to the endless conveyor 74 or similar driving element (chain, belt, cable) and may be distanced from one another of a pitch equivalent to a multiple of the distance between the loading position 2.1 and the unloading position 2.2.

The charging cars (2.5, 2.6) are tilted in a deviation portion to unload the unit loads 4. Tilting can occur through appropriate means. For instance, the front of the charging car can be attached to endless chain or belt and the rear of the charging car can be guided on rails. These rails may deviate the rear wheels of the charging car so as to pivot the charging car. Other pivoting means can be used as in known grain bucket conveying systems, where buckets are tilted over hoppers to empty their content.

Alternatively, or in complement, the charging cars (2.5, 2.6) may be decouplable from the driving element, so that several charging cars may be loaded with unit loads and accumulated between the loading position 2.1 and the unloading position 2.2. Known technologies used for "pallet conveyors" can be used.

With that respect, figure 27 shows an exemplary embodiment of the charging car 2 and the endless driving element 74.

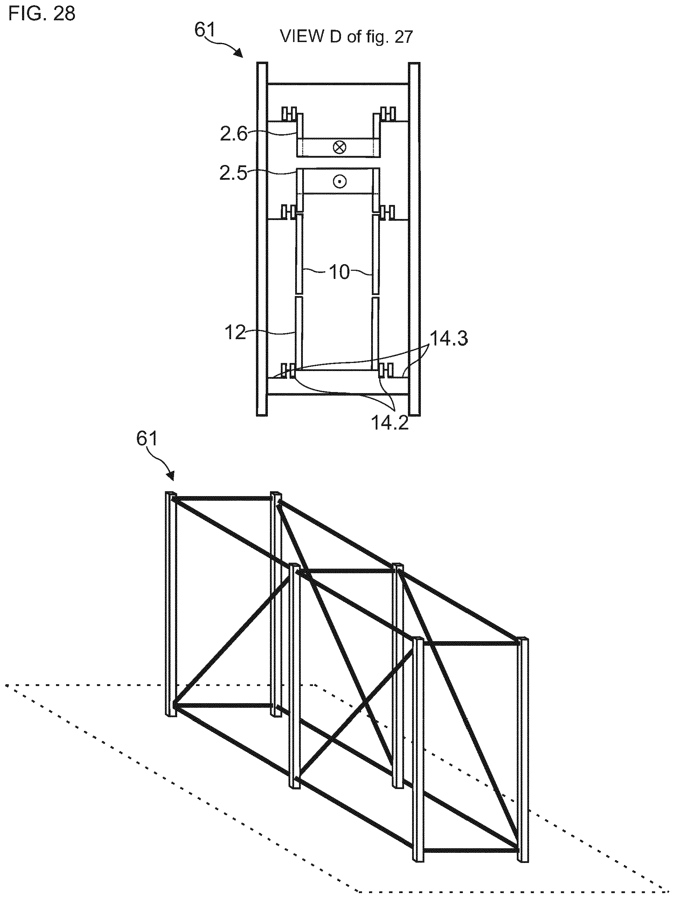

Figure 28 shows a cross-section of the structure 61 along with an isometric view of the structure 61. The structure 61 may be substantially similar in design to the structure 60 presented in figure 26. One can see that the charging cars (2.5, 2.6) travel along a closed path. The charging car may be upside down in one of its way along the closed path.

In a first example not forming part of the claimed invention of the subsystem 41 with closed-loop travelling charging car, the gear (73 on fig. 26) is driven by speed bumps actuated by land vehicles.

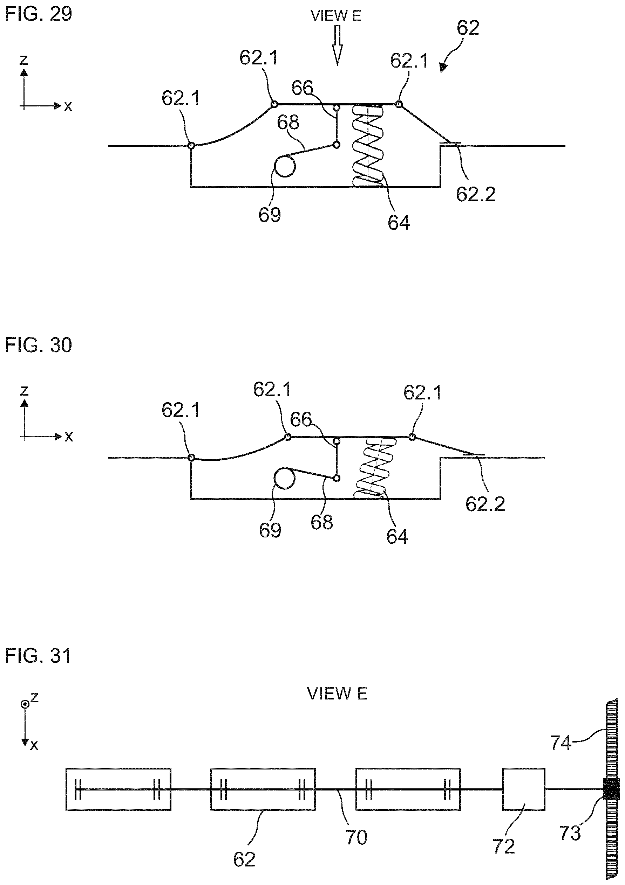

Figs 29-32 show exemplary embodiments of the speed bumps. The bump 62 is movable between an expanded position as shown in figure 29 and a retracted position as shown in figure 30, the speed bump comprises three pivot connections 62.1 and a slide link 62.2. The upper surface of the bump can be partially curved to receive vehicle tires more smoothly.

A vehicle travelling from left to right on figures 29 and 30 along the x axis will drive on the bump and press the bump down into the retracted position.

An elastic element 64 e.g. a spring can ensure the return in position of the bump 62 from its retracted position to its expanded position. A rod 66 and an arm 68 are provided to actuate a cog freewheel 69 during the downwards movement of the bump. The rod 66 connects the bump 62 to the arm 68. The arm 68 is connected to the cog freewheel 69 in such a way that the vertical movement of the rod 66 results in a rotation of the cog freewheel.

The cog freewheel 69 thus rotates when the speed bump 62 moves from its expanded position to its retracted position driving the shaft 70.

When the bump 62 moves back into its expanded position, the shaft 70 keeps its angular position.

The cog freewheel 69 therefore enables a step by step rotation of the gear and thus a step by step movement of the charging cars.

Alternatively to the rod/arm mechanism can be replaced with a hydraulic piston which transfers hydraulic energy to raise incrementally the charging car.

Advantageously and as shown on figure 31, the bump 62 can be one of many bumps arranged in series. A shaft 70 can connect a plurality of bumps 62 through their respective cog freewheels 69.

An optional gearbox 72 and/or clutches can be provided to smoothly conjugate the rotation generated by each cog freewheel, so that the gear 73 can drive the endless conveyor 74.

Several shafts 70 can be arranged in parallel to drive the endless conveyor by means of several gears 73.

The bumps can be located in crossroads or at a deceleration zone, *e.g*. toll gates, traffic lights, parking slots, etc.

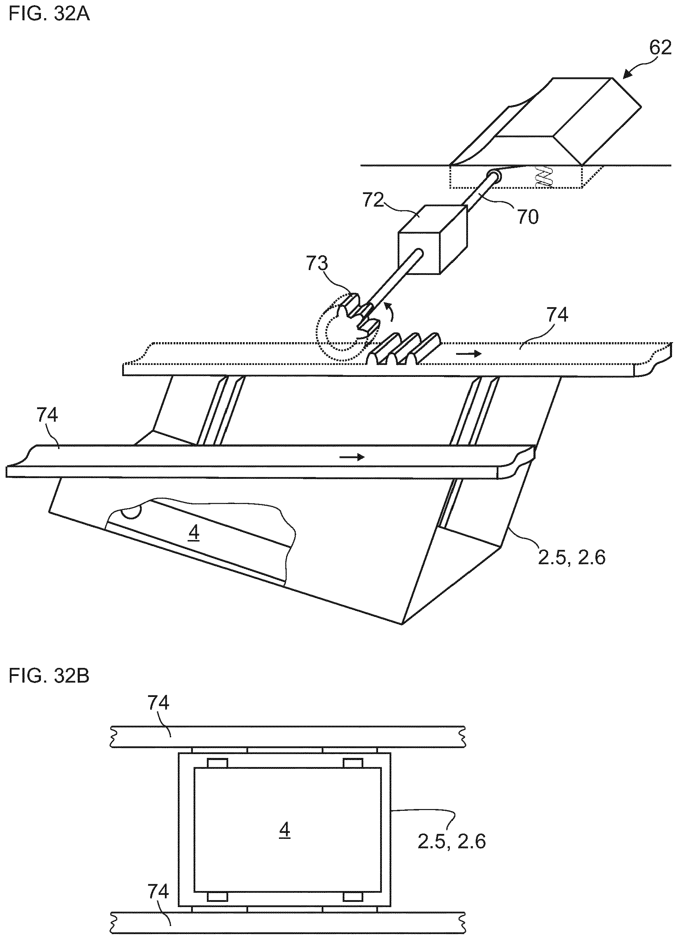

Figure 32A shows an isometric view of an embodiment with a bump 62, a gear box 72 and the gear 73 driving the endless belt 74 which moves the charging cars (2.5, 2.6). Figure 32B shows a top view of the unit load 4 loaded in the charging car (2.5, 2.6). One can see that the gap between the endless belts 74 is bigger than the width of the unit load 4 so that unit loads can enter and exit the charging car 2.5, 2.6 without mechanical interference with the endless belts 74.

Figures 33 and 34 illustrate two steps of the process where the charging cars are moved along a closed path.

In an embodiment according to the invention of the subsystem 41 with closed-loop travelling charging car, the gear(s) 73 driving the endless conveyor is/are driven by energy recovered from tide.

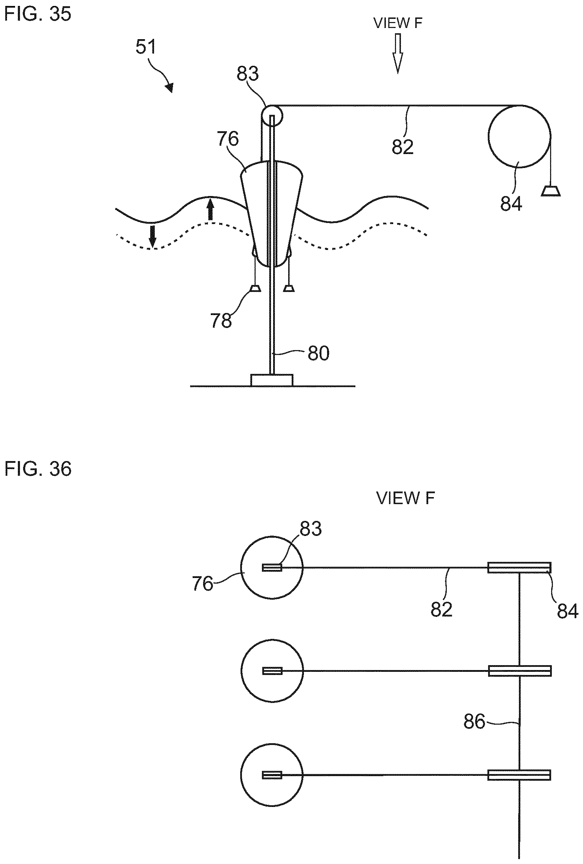

A power recovery device 51 as depicted in figure 35 shows a buoy 76 adapted to float on water. The buoy is ballasted with one or more counterweights 78 and slides up and down. It may be guided by a vertical fixed pillar 80. The pillar 80 is securely fastened to the ground under water. Alternatively, the buoy 76 may slide along an oblique direction.

When the water goes down into low tide, the buoy 76 and the counterweights 78 move vertically downwards, pulling a cable 82 which makes a cog freewheel 84 rotate. A spring-like mechanism within the cog-free wheel ensures that the cable remain in tension also when the buoy 76 is moving upwards.

As visible on figure 36, the cog freewheels 84 drives a shaft 86 via an optional gearbox and/or clutch. The shaft 86 is coupled to the gear (73 on fig. 28) that drives the endless conveyor moving the charging cars. The arrangement may be similar to the one used with the speed bumps on figures 29-32.

Figure 36 shows a top view of the arrangement of fig. 35. Three buoys 76 are arranged in parallel, driving three cog freewheels 84 to rotate the shaft 86.

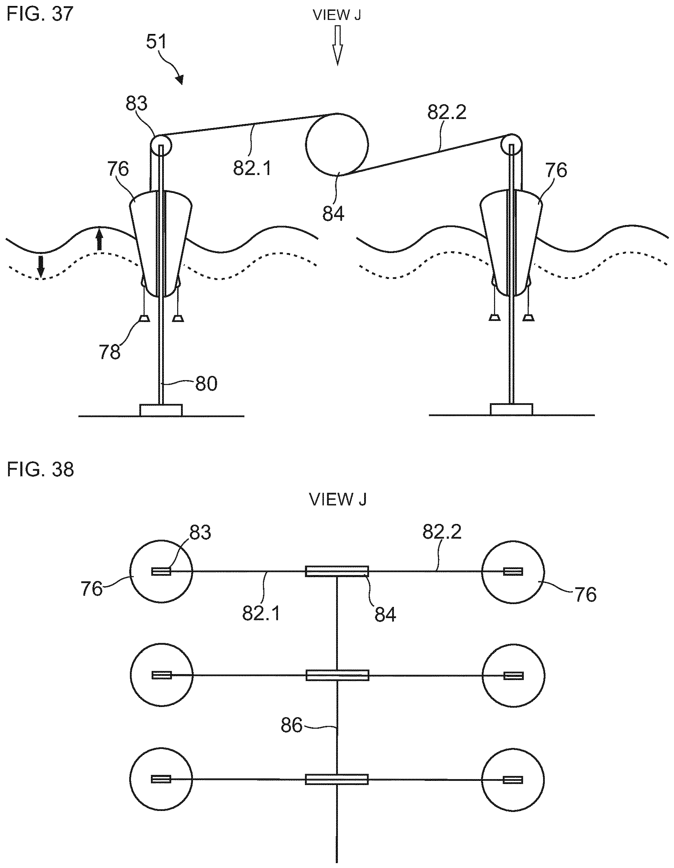

As shown in figure 37, two opposite buoys 76 can be set up so as to drive the same cog freewheel 84. Figure 38 shows the example where two sets of three buoys are used.

Needless to say, any appropriate number of buoys can be used to deliver the required amount of angular movement to the shaft 86 and required amount of torque to make the conveyor advance.

In a further embodiment according to the invention of the subsystem 41 with closed-loop travelling charging car (not illustrated), at least one watermill 88 driven in rotation by a water flow can be used. In advantageous embodiments a plurality of watermills arranged in parallel and/or in series, can drive one or more shafts, and thus one or more gears 73. Similarly to the previous examples, the shafts can be provided with appropriate gearboxes and/or clutches to provide a smooth driving force to the endless conveyor.

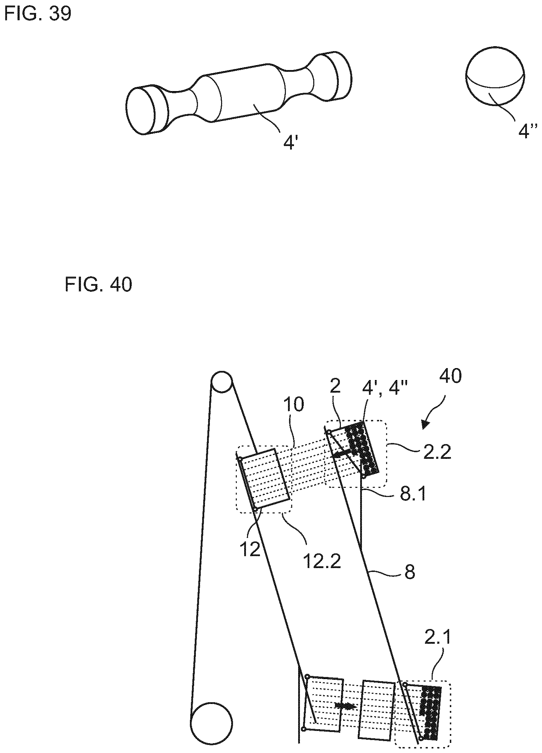

Figure 39 shows another example of shape for the unit load. For instance, unit loads 4' may be of a generally cylindrical shape with two ends being adapted to engage with rails provided in the charging car and load car. The ends may be provided with bearings. In another example, the unit loads 4" may have the shape of a ball.

Figure 40 illustrates the process for generating energy, when the unit load is as in one of the examples of figure 39. The process is in essence similar to the process shown on figures 5 to 15. The transit zone between the load car and charging car may be equipped with several rows of rails 10.

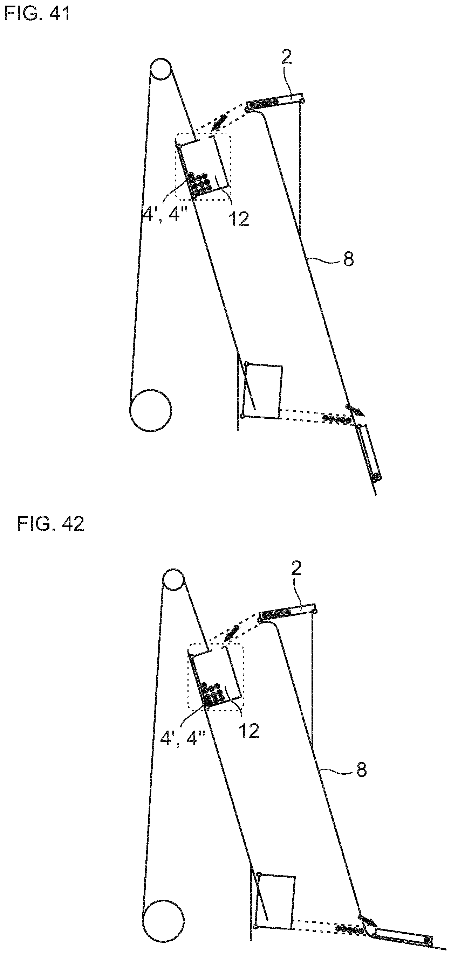

Figures 41 and 42 show another variant. Here, the charging car are rectangular.

This example also shows that the rails 8 can be provided with a curved portion (at the top and/or at the bottom) to assist the pivoting motion of the charging car 2.

The pivot angle of the charging car may be for instance of 30°.

The examples of the figures are given for illustrated purpose only and the invention is not limited by the specifics of the figures. The various embodiments of the invention can be combined or separated to build a system for generating electrical energy with appropriate power supply.

For instance, on a mountain whereby a river flows, both the embodiment using watermills and the embodiment recovering energy from water rain can be combined to lift up several charging cars providing unit loads to two or more load cars.

The number of load cars and charging cars involved can be as desired.

In addition, human or animal traction force can be used to manipulate unit loads or to lift up the charging cars.

The orders of magnitude can be as follows. The overall system can extend over several hundreds of meters along a building or a mountain. Smaller or larger systems may also be used. It can be used onboard a sea vehicle such as a vessel transporting containers.

The unit loads weight can be ranging from 10 or from 100 kg and up to 100 tons. For instance, the unit loads used in the embodiments comprising a power water recovery device can weight from 100 kg and up to 1 ton.

The unit loads may be lifted incrementally of up to 1 km, *i.e.* a step up of about 1 km for the embodiment comprising a power water recovery device implemented in mountains. When driving a closed-loop conveyor with buoys, the step by step movement of the cog freewheel is inherent to the amplitude of the tide.

The elevation of the upper position 12.2 or unloading position 2.2 can be about 50m to about 1 km above the lower position 12.1 or loading position 2.1.

The electrical power generating system of this invention may comprise appropriate control device and electro-mechanical actuators (such as limit switch, proximity detector, camera, level 1 and 2 automation) to appropriately release the load car. This enables to produce energy on demand. All the other mechanisms (releasing the unit loads from buffer, lifting the charging car upwards, etc.) can be purely mechanically performed in an automated way, without consuming energy.

It would be apparent to the skilled artisan that every mechanically actuated device disclosed herein can also be foreseen as hydraulic device without departing from the scope of the invention as defined by the appended claims.

## Claims

1. Electrical power generating system, comprising:
an electrical generator (26);
a drum (22) operatively coupled to the generator (26);
a cable (18) winded around the drum (22); and
at least one load car (12) travelling on mechanical, magnetic or pneumatical rails (14) between an upper position (12.2) and a lower position (12.3) under the action of gravity, wherein the drum (22), the cable (18) and the load car (12) are configured such that in its downward movement, the load car (12) pulls the cable (18) which rotates the drum (22);
the system comprising:
a plurality of unit loads (4) configured for being loaded into, and unloaded from, the load car (12);
a lifting subsystem (40) for lifting unit loads (4);
the subsystem (40, 41) comprising a water power recovery device (50, 51) and a charging car (2, 2.5, 2.6) moved by the water power recovery device (50, 51), the charging car being moved between a loading position (2.1) where it receives unit loads (4) from the load car (12) in its lower position (12.1) and an unloading position (2.2) where it transfers the unit loads (4) to the load car (12) in its upper position (12.2),
the system being **characterized in that** it comprises:
mechanical, magnetic or pneumatical rails (8) supporting the charging car (2) and having a deviating portion (8.1) making the charging car (2) tilt nearby the unloading position (2.2), such that as to allow unit loads (4) to be transferred by gravity to the load car (12), potentially via a buffer (6.1); and
wherein the rails (14) supporting the load car (12) have a deviating portion (14.1) making the load car (12) tilt nearby the lower position (12.1), such that as to allow unit loads (4) to be transferred by gravity to the charging car (2), potentially via a buffer (6).

2. System according to claim 1, **characterized in that** the water power recovery device (51) comprises an endless conveyor (74) driving the charging cars (2.5, 2.6) along a closed path.

3. System according to claim 2, **characterized in that** the power recovery device (51) comprises at least one watermill driven by a water flow and powering the endless conveyor (74), preferably further **characterized in that** the power recovery device (51) further comprises:
at least one shaft (70) linking the watermill to the endless conveyor; and
at least one gearbox (72) arranged between the watermill and the shaft (70).

4. System according to claim 2, **characterized in that** the water power recovery device (51) comprises a tidal generator powering the endless conveyor (74), preferably wherein the tidal generator comprises:
a buoy (76) adapted to float on water;
a guide, for example a pillar (80), for guiding the buoy (76) in a vectorial, preferably vertical, movement;
a cable (82) linked to the buoy (76) and driving a cog freewheel (84);
the cog freewheel (84) driving the endless conveyor (74) via a shaft (86) and an optional gearbox,
more preferably wherein the tidal generator comprises a plurality of buoys (76) with their respective cog freewheel (84) arranged in parallel to drive a common shaft (86).

5. System according to claim 1, **characterized in that** the charging car (2) moves up and down along a finite path and the water power recovery device (50) comprises:
a bucket (46) travelling between a filling position (46.1) and an emptying position (46.2) under the sole action of gravity;
a cable (56) connecting the bucket (46) to the charging car (2);
a pulley (58) winding the cable (56), the pulley (58) and the cable (56) being arranged such that the bucket (46) is in its emptying position (46.2) when the charging car (2) is in the unloading position (2.2), and such that the bucket (46) is in its filling position (46.1) when the charging car (2) is in the loading position (2.1),
preferably further **characterized in that** the water power recovery device (50) comprises a water receiving surface (42) gathering/directing water from a water flow into an intermediate buffer hopper (44), and a valve adapted to be open when the bucket (46) is in its filling position (46.1), so as to fill the bucket (46) with water contained in the hopper (44).

6. System according to claim 5, **characterized in that** the water power recovery device (50) further comprises:
an exhaust pipe (54) situated below the emptying position (46.2);
a drain device (48) implemented at the bottom of the bucket (46), wherein the drain device (48) is adapted to drain the water out of the bucket (46) and into the exhaust pipe (54) when the bucket (46) is in its emptying position (46.2).

7. System according to any of claims 1-6, further comprising at least one buffer (6, 6.1) for unit loads (4) the buffer (6) being equipped with releasable stoppers for allowing or preventing movement of the unit loads (4), wherein moving the unit loads from the load car (12) in its lower position (12.1) into the charging car (2) in its loading position (2.1) and/or moving the unit loads (4) from the charging car (2) in its unloading position (2.2) into the load car (12) in its upper position (12.2) is operated by gravity in the buffer (6, 6.1), or on mechanical rails, or on magnetic rails, or on pneumatical rails.

8. System according to any of claims 1-7, **characterized in that** the rails (8) supporting the charging car (2) comprise a pair of inner rails (8.2) and a pair of outer rails (8.3); and the charging car (2) comprises two front wheels (2.4) supported by the inner rails (8.2) and two rear wheels (2.3) supported by the outer rails (8.3) or by both inner (8.2) and outer rails (8.3), wherein in the deviation portion (8.1), the outer rails (8.3) deviate from the inner rails (8.2) so as to tilt the charging car (2).

9. System according to any of claims 1-8, **characterized in that** the rails (14) supporting the load car (12) comprise a pair of inner rails (14.3) and a pair of outer rails (14.2); and the load car (12) comprises two front wheels (12.4) supported by the inner rails (14.3) and two rear wheels (12.3) supported by the outer rails or by both inner and outer rails (14.2), wherein in the deviation portion (14.1), the inner rails (14.3) deviate from the outer rails (14.2) so as to tilt the load car (12).

10. System according to any of claims 1 to 9 in combination with claim 2, **characterized in that** it comprises a steel structure gallery (61) comprising superposed rail tracks disposed on three levels for supporting the motion of the load car (12) and the charging cars (2.5, 2.6).

11. System according to any of claims 1 to 9 in combination with claim 5, **characterized in that** it comprises a steel structure gallery (60) comprising three superposed rail tracks (8, 14, 52) disposed on three levels for supporting the motion of the load car (12), the charging car (2) and the bucket (46).

12. System according to any of claims 1-11, **characterized in that** the load car (12) is a first load car (12.5), and the system (30) comprises a second load car (12.6), the first and second load cars operating in phase opposition both being mobile between their respective upper and lower positions, and optionally the system comprises further pairs of load cars operating in phase opposition, preferably further **characterized in that** the first and second load cars (12.5), (12.6), and optionally the further pairs of load cars are coupled to a common drum (22) by means of two respective cables (18.1), (18.2) or one common cable (18).

13. System according to any of claims 1-12, **characterized in that** the unit load (4, 4', 4") is substantially parallelepipedal or substantially cylindrical or substantially ball-shaped and is optionally provided with bearings or wheels.

14. Method for generating electrical power in a system according to any of claims 1 to 13, the method comprising the steps of:
holding an empty load car (12) in an upper position (12.2);
raising at least one unit load (4) in a charging car (2) by means of a water power recovery device;
unloading the at least one unit load (4) from the charging car (2) into the load car (12) or into a buffer (6) where the at least one unit load (4) is retained;
optionally moving the empty charging car (2) into a loading position (2.1), loading the charging car (2) with at least one further unit load (4) and repeating the steps of raising and unloading as above;
releasing the unit loads (4) from the optional buffer (6.1) into the load car (12);
releasing the load car (12) so as to let it travel downwards by the action of gravity;
pulling, by means of the movement of the load car (12), a cable (18);
rotating a drum (22) by means of the movement of the cable (18);
driving an electrical generator (26) coupled to the drum (22).

15. Method according to claim 14, wherein the step of raising at least one unit load (4) happens in accordance with the water power delivered and the step of releasing the load car (12) is performed on demand and independently from the step of raising at least one unit load (4).

## Patentansprüche

1. Elektrisches Stromerzeugungssystem, umfassend: einen elektrischen Generator (26); eine Trommel (22), die mit dem Generator (26) in Wirkverbindung steht; ein Kabel (18), das um die Trommel (22) gewickelt ist; und mindestens einen Lastwagen (12), der auf mechanischen, magnetischen oder pneumatischen Schienen (14) zwischen einer oberen Position (12.2) und einer unteren Position (12.3) unter der Wirkung der Schwerkraft fährt, wobei die Trommel (22), das Kabel (18) und der Lastwagen (12) so konfiguriert sind, dass der Lastwagen (12) in seiner Abwärtsbewegung das Kabel (18) zieht, wodurch die Trommel (22) rotiert; das System umfassend: eine Vielzahl von Einheitslasten (4), die zum Beladen und Entladen in den Lastwagen (12) konfiguriert sind; ein Hebesubsystem (40) zum Heben von Einheitslasten (4); das Subsystem (40, 41) umfassend ein Wasserenergierückgewinnungsgerät (50, 51) und einen Ladewagen (2, 2.5, 2.6), der durch das Wasserenergierückgewinnungsgerät (50, 51) bewegt wird, wobei der Ladewagen zwischen einer Ladeposition (2.1), in der er Einheitslasten (4) vom Lastwagen (12) in seiner unteren Position (12.1) erhält, und einer Entladeposition (2.2), in der er die Einheitslasten (4) auf den Lastwagen (12) in seiner oberen Position (12.2) überträgt, bewegt wird, das System **dadurch gekennzeichnet, dass** es umfasst: mechanische, magnetische oder pneumatische Schienen (8), die den Ladewagen (2) stützen und einen abweichenden Abschnitt (8.1) aufweisen, der den Ladewagen (2) in der Nähe der Entladeposition (2.2) kippen lässt, so dass die Einheitslasten (4) durch die Schwerkraft auf den Lastwagen (12) übertragen werden können, möglicherweise über einen Puffer (6.1); und wobei die Schienen (14), die den Lastwagen (12) stützen, einen abweichenden Abschnitt (14.1) aufweisen, der den Lastwagen (12) in der Nähe der unteren Position (12.1) kippen lässt, so dass die Einheitslasten (4) durch die Schwerkraft auf den Ladewagen (2) übertragen werden können, möglicherweise über einen Puffer (6).

2. System nach Anspruch 1, **dadurch gekennzeichnet, dass** das Wasserenergierückgewinnungsgerät (51) einen endlosen Förderer (74) umfasst, der die Ladewagen (2.5, 2.6) entlang eines geschlossenen Pfades antreibt.

3. System nach Anspruch 2, **dadurch gekennzeichnet, dass** das Energierückgewinnungsgerät (51) mindestens ein Wasserrad umfasst, das durch einen Wasserfluss angetrieben wird und den endlosen Förderer (74) antreibt, vorzugsweise weiter **dadurch gekennzeichnet, dass** das Energierückgewinnungsgerät (51) weiter umfasst: mindestens eine Welle (70), die das Wasserrad mit dem endlosen Förderer verbindet; und mindestens ein Getriebe (72), das zwischen dem Wasserrad und der Welle (70) angeordnet ist.

4. System nach Anspruch 2, **dadurch gekennzeichnet, dass** das Wasserenergierückgewinnungsgerät (51) einen Gezeitengenerator umfasst, der den endlosen Förderer (74) antreibt, vorzugsweise wobei der Gezeitengenerator umfasst: eine Boje (76), die zum Schwimmen auf Wasser geeignet ist; eine Führung, beispielsweise eine Säule (80), zur Führung der Boje (76) in einer vektoriellen, vorzugsweise vertikalen Bewegung; ein Kabel (82), das mit der Boje (76) verbunden ist und ein Zahnradfreilauf (84) antreibt; der Zahnradfreilauf (84) treibt den endlosen Förderer (74) über eine Welle (86) und ein optionales Getriebe an, vorzugsweise weiter **dadurch gekennzeichnet, dass** der Gezeitengenerator eine Vielzahl von Bojen (76) mit ihren jeweiligen Zahnradfreiläufen (84) umfasst, die parallel angeordnet sind, um eine gemeinsame Welle (86) anzutreiben.

5. System nach Anspruch 1, **dadurch gekennzeichnet, dass** der Ladewagen (2) entlang eines endlichen Pfades auf- und abwärts bewegt wird und das Wasserenergierückgewinnungsgerät (50) umfasst: einen Eimer (46), der zwischen einer Füllposition (46.1) und einer Entleerungsposition (46.2) unter der alleinigen Wirkung der Schwerkraft fährt; ein Kabel (56), das den Eimer (46) mit dem Ladewagen (2) verbindet; eine Seilrolle (58), die das Kabel (56) aufwickelt, wobei die Seilrolle (58) und das Kabel (56) so angeordnet sind, dass der Eimer (46) sich in seiner Entleerungsposition (46.2) befindet, wenn der Ladewagen (2) in der Entladeposition (2.2) ist, und dass der Eimer (46) sich in seiner Füllposition (46.1) befindet, wenn der Ladewagen (2) in der Ladeposition (2.1) ist, vorzugsweise weiter **dadurch gekennzeichnet, dass** das Wasserenergierückgewinnungsgerät (50) eine Wasserauffangfläche (42) umfasst, die Wasser aus einem Wasserfluss in einen Zwischenpuffertrichter (44) sammelt/lenkt, und ein Ventil, das geöffnet wird, wenn sich der Eimer (46) in seiner Füllposition (46.1) befindet, um den Eimer (46) mit Wasser aus dem Trichter (44) zu füllen.

6. System nach Anspruch 5, **dadurch gekennzeichnet, dass** das Wasserenergierückgewinnungsgerät (50) weiter umfasst: ein Abgasrohr (54), das sich unterhalb der Entleerungsposition (46.2) befindet; ein Entwässerungsgerät (48), das am Boden des Eimers (46) implementiert ist, wobei das Entwässerungsgerät (48) dazu geeignet ist, das Wasser aus dem Eimer (46) in das Abgasrohr (54) zu entwässern, wenn sich der Eimer (46) in seiner Entleerungsposition (46.2) befindet.

7. System nach einem der Ansprüche 1-6, weiter umfassend mindestens einen Puffer (6, 6.1) für Einheitslasten (4), wobei der Puffer (6) mit lösbaren Stoppern ausgestattet ist, um die Bewegung der Einheitslasten (4) zu ermöglichen oder zu verhindern, wobei die Bewegung der Einheitslasten vom Lastwagen (12) in seiner unteren Position (12.1) in den Ladewagen (2) in seiner Ladeposition (2.1) und/oder die Bewegung der Einheitslasten (4) vom Ladewagen (2) in seiner Entladeposition (2.2) in den Lastwagen (12) in seiner oberen Position (12.2) durch die Schwerkraft im Puffer (6, 6.1) oder auf mechanischen Schienen, magnetischen Schienen oder pneumatischen Schienen betrieben wird.

8. System nach einem der Ansprüche 1-7, **dadurch gekennzeichnet, dass** die Schienen (8), die den Ladewagen (2) stützen, ein Paar innerer Schienen (8.2) und ein Paar äußerer Schienen (8.3) umfassen; und der Ladewagen (2) umfasst zwei Vorderräder (2.4), die von den inneren Schienen (8.2) gestützt werden, und zwei Hinterräder (2.3), die von den äußeren Schienen (8.3) oder von sowohl inneren (8.2) als auch äußeren Schienen (8.3) gestützt werden, wobei im Abweichungsabschnitt (8.1) die äußeren Schienen (8.3) von den inneren Schienen (8.2) abweichen, um den Ladewagen (2) zu kippen.

9. System nach einem der Ansprüche 1-8, **dadurch gekennzeichnet, dass** die Schienen (14), die den Lastwagen (12) stützen, ein Paar innerer Schienen (14.3) und ein Paar äußerer Schienen (14.2) umfassen; und der Lastwagen (12) umfasst zwei Vorderräder (12.4), die von den inneren Schienen (14.3) gestützt werden, und zwei Hinterräder (12.3), die von den äußeren Schienen oder von sowohl inneren als auch äußeren Schienen (14.2) gestützt werden, wobei im Abweichungsabschnitt (14.1) die inneren Schienen (14.3) von den äußeren Schienen (14.2) abweichen, um den Lastwagen (12) zu kippen.

10. System nach einem der Ansprüche 1 bis 9 in Kombination mit Anspruch 2, **dadurch gekennzeichnet, dass** es eine Stahlstrukturgalerie (61) umfasst, die übereinander angeordnete Schienen auf drei Ebenen umfasst, um die Bewegung des Lastwagens (12) und der Ladewagen (2.5, 2.6) zu unterstützen.

11. System nach einem der Ansprüche 1 bis 9 in Kombination mit Anspruch 5, **dadurch gekennzeichnet, dass** es eine Stahlstrukturgalerie (60) umfasst, die drei übereinander angeordnete Schienen (8, 14, 52) auf drei Ebenen umfasst, um die Bewegung des Lastwagens (12), des Ladewagens (2) und des Eimers (46) zu unterstützen.

12. System nach einem der Ansprüche 1-11, **dadurch gekennzeichnet, dass** der Lastwagen (12) ein erster Lastwagen (12.5) ist, und das System (30) einen zweiten Lastwagen (12.6) umfasst, wobei die ersten und zweiten Lastwagen in Phasenopposition arbeiten und beide zwischen ihren jeweiligen oberen und unteren Positionen beweglich sind, und optional umfasst das System weitere Paare von Lastwagen, die in Phasenopposition arbeiten, vorzugsweise weiter **dadurch gekennzeichnet, dass** die ersten und zweiten Lastwagen (12.5), (12.6) und optional die weiteren Paare von Lastwagen mit einer gemeinsamen Trommel (22) durch zwei jeweilige Kabel (18.1), (18.2) oder ein gemeinsames Kabel (18) verbunden sind.

13. System nach einem der Ansprüche 1-12, **dadurch gekennzeichnet, dass** die Einheitslast (4, 4', 4") im Wesentlichen quaderförmig oder im Wesentlichen zylindrisch oder im Wesentlichen kugelförmig ist und optional mit Lagern oder Rädern ausgestattet ist.

14. Verfahren zur Erzeugung von elektrischer Energie in einem System nach einem der Ansprüche 1 bis 13, wobei das Verfahren die Schritte umfasst: Halten eines leeren Lastwagens (12) in einer oberen Position (12.2); Heben von mindestens einer Einheitslast (4) in einem Ladewagen (2) mittels eines Wasserenergierückgewinnungsgeräts; Entladen der mindestens einen Einheitslast (4) aus dem Ladewagen (2) in den Lastwagen (12) oder in einen Puffer (6), in dem die mindestens eine Einheitslast (4) zurückgehalten wird; optionales Bewegen des leeren Ladewagens (2) in eine Ladeposition (2.1), Beladen des Ladewagens (2) mit mindestens einer weiteren Einheitslast (4) und Wiederholen der Schritte des Hebens und Entladens wie oben; Freigeben der Einheitslasten (4) aus dem optionalen Puffer (6.1) in den Lastwagen (12); Freigeben des Lastwagens (12), um ihn durch die Wirkung der Schwerkraft abwärts fahren zu lassen; Ziehen eines Kabels (18) durch die Bewegung des Lastwagens (12); Rotieren einer Trommel (22) durch die Bewegung des Kabels (18); Antreiben eines elektrischen Generators (26), der mit der Trommel (22) gekoppelt ist.

15. Verfahren nach Anspruch 14, wobei der Schritt des Hebens von mindestens einer Einheitslast (4) in Übereinstimmung mit der gelieferten Wasserenergie erfolgt und der Schritt des Freigebens des Lastwagens (12) auf Abruf und unabhängig vom Schritt des Hebens von mindestens einer Einheitslast (4) durchgeführt wird.

## Revendications

1. Système de génération d'énergie électrique, comprenant : un générateur électrique (26) ; un tambour (22) couplé de manière opérationnelle au générateur (26) ; un câble (18) enroulé autour du tambour (22) ; et au moins un chariot de charge (12) se déplaçant sur des rails mécaniques, magnétiques ou pneumatiques (14) entre une position supérieure (12.2) et une position inférieure (12.3) sous l'action de la gravité, où le tambour (22), le câble (18) et le chariot de charge (12) sont configurés de telle sorte que dans son mouvement descendant, le chariot de charge (12) tire le câble (18) qui fait tourner le tambour (22) ; le système comprenant : une pluralité de charges unitaires (4) configurées pour être chargées dans, et déchargées du, chariot de charge (12) ; un sous-système de levage (40) pour soulever les charges unitaires (4) ; le sous-système (40, 41) comprenant un dispositif de récupération d'énergie hydraulique (50, 51) et un chariot de chargement (2, 2.5, 2.6) déplacé par le dispositif de récupération d'énergie hydraulique (50, 51), le chariot de chargement étant déplacé entre une position de chargement (2.1) où il reçoit les charges unitaires (4) du chariot de charge (12) dans sa position inférieure (12.1) et une position de déchargement (2.2) où il transfère les charges unitaires (4) au chariot de charge (12) dans sa position supérieure (12.2), le système étant **caractérisé en ce qu'**il comprend : des rails mécaniques, magnétiques ou pneumatiques (8) supportant le chariot de chargement (2) et ayant une portion déviée (8.1) faisant incliner le chariot de chargement (2) à proximité de la position de déchargement (2.2), de telle sorte que les charges unitaires (4) soient transférées par gravité au chariot de charge (12), potentiellement via un tampon (6.1) ; et où les rails (14) supportant le chariot de charge (12) ont une portion déviée (14.1) faisant incliner le chariot de charge (12) à proximité de la position inférieure (12.1), de telle sorte que les charges unitaires (4) soient transférées par gravité au chariot de chargement (2), potentiellement via un tampon (6).

2. Système selon la revendication 1, **caractérisé en ce que** le dispositif de récupération d'énergie hydraulique (51) comprend un convoyeur sans fin (74) entraînant les chariots de chargement (2.5, 2.6) le long d'un chemin fermé.

3. Système selon la revendication 2, **caractérisé en ce que** le dispositif de récupération d'énergie (51) comprend au moins un moulin à eau entraîné par un flux d'eau et alimentant le convoyeur sans fin (74), de préférence **caractérisé en ce que** le dispositif de récupération d'énergie (51) comprend en outre : au moins un arbre (70) reliant le moulin à eau au convoyeur sans fin ; et au moins une boîte de vitesses (72) disposée entre le moulin à eau et l'arbre (70).

4. Système selon la revendication 2, **caractérisé en ce que** le dispositif de récupération d'énergie hydraulique (51) comprend un générateur de marée alimentant le convoyeur sans fin (74), de préférence où le générateur de marée comprend : une bouée (76) adaptée pour flotter sur l'eau ; un guide, par exemple un pilier (80), pour guider la bouée (76) dans un mouvement vectoriel, de préférence vertical ; un câble (82) relié à la bouée (76) et entraînant une roue libre à cliquet (84) ; la roue libre à cliquet (84) entraînant le convoyeur sans fin (74) via un arbre (86) et une boîte de vitesses optionnelle, de préférence où le générateur de marée comprend une pluralité de bouées (76) avec leurs roues libres à cliquet respectives (84) disposées en parallèle pour entraîner un arbre commun (86).

5. Système selon la revendication 1, **caractérisé en ce que** le chariot de chargement (2) se déplace de haut en bas le long d'un chemin fini et le dispositif de récupération d'énergie hydraulique (50) comprend : un seau (46) se déplaçant entre une position de remplissage (46.1) et une position de vidage (46.2) sous la seule action de la gravité ; un câble (56) reliant le seau (46) au chariot de chargement (2) ; une poulie (58) enroulant le câble (56), la poulie (58) et le câble (56) étant disposés de telle sorte que le seau (46) soit dans sa position de vidage (46.2) lorsque le chariot de chargement (2) est dans la position de déchargement (2.2), et de telle sorte que le seau (46) soit dans sa position de remplissage (46.1) lorsque le chariot de chargement (2) est dans la position de chargement (2.1), de préférence **caractérisé en ce que** le dispositif de récupération d'énergie hydraulique (50) comprend une surface de réception d'eau (42) recueillant/dirigeant l'eau d'un flux d'eau dans une trémie tampon intermédiaire (44), et une vanne adaptée pour être ouverte lorsque le seau (46) est dans sa position de remplissage (46.1), de manière à remplir le seau (46) avec l'eau contenue dans la trémie (44).

6. Système selon la revendication 5, **caractérisé en ce que** le dispositif de récupération d'énergie hydraulique (50) comprend en outre : un tuyau d'échappement (54) situé sous la position de vidage (46.2) ; un dispositif de vidange (48) mis en œuvre au fond du seau (46), où le dispositif de vidange (48) est adapté pour vidanger l'eau du seau (46) et dans le tuyau d'échappement (54) lorsque le seau (46) est dans sa position de vidage (46.2).

7. Système selon l'une quelconque des revendications 1 à 6, comprenant en outre au moins un tampon (6, 6.1) pour les charges unitaires (4), le tampon (6) étant équipé de butées amovibles pour permettre ou empêcher le mouvement des charges unitaires (4), où le déplacement des charges unitaires du chariot de charge (12) dans sa position inférieure (12.1) dans le chariot de chargement (2) dans sa position de chargement (2.1) et/ou le déplacement des charges unitaires (4) du chariot de chargement (2) dans sa position de déchargement (2.2) dans le chariot de charge (12) dans sa position supérieure (12.2) est opéré par gravité dans le tampon (6, 6.1), ou sur des rails mécaniques, ou sur des rails magnétiques, ou sur des rails pneumatiques.

8. Système selon l'une quelconque des revendications 1 à 7, **caractérisé en ce que** les rails (8) supportant le chariot de chargement (2) comprennent une paire de rails intérieurs (8.2) et une paire de rails extérieurs (8.3) ; et le chariot de chargement (2) comprend deux roues avant (2.4) supportées par les rails intérieurs (8.2) et deux roues arrière (2.3) supportées par les rails extérieurs (8.3) ou par les rails intérieurs (8.2) et extérieurs (8.3), où dans la portion de déviation (8.1), les rails extérieurs (8.3) dévient des rails intérieurs (8.2) de manière à incliner le chariot de chargement (2).

9. Système selon l'une quelconque des revendications 1 à 8, **caractérisé en ce que** les rails (14) supportant le chariot de charge (12) comprennent une paire de rails intérieurs (14.3) et une paire de rails extérieurs (14.2) ; et le chariot de charge (12) comprend deux roues avant (12.4) supportées par les rails intérieurs (14.3) et deux roues arrière (12.3) supportées par les rails extérieurs ou par les rails intérieurs et extérieurs (14.2), où dans la portion de déviation (14.1), les rails intérieurs (14.3) dévient des rails extérieurs (14.2) de manière à incliner le chariot de charge (12).

10. Système selon l'une quelconque des revendications 1 à 9 en combinaison avec la revendication 2, **caractérisé en ce qu'**il comprend une galerie de structure en acier (61) comprenant des voies ferrées superposées disposées sur trois niveaux pour supporter le mouvement du chariot de charge (12) et des chariots de chargement (2.5, 2.6).

11. Système selon l'une quelconque des revendications 1 à 9 en combinaison avec la revendication 5, **caractérisé en ce qu'**il comprend une galerie de structure en acier (60) comprenant trois voies ferrées superposées (8, 14, 52) disposées sur trois niveaux pour supporter le mouvement du chariot de charge (12), du chariot de chargement (2) et du seau (46).

12. Système selon l'une quelconque des revendications 1 à 11, **caractérisé en ce que** le chariot de charge (12) est un premier chariot de charge (12.5), et le système (30) comprend un second chariot de charge (12.6), les premier et second chariots de charge fonctionnant en opposition de phase étant tous deux mobiles entre leurs positions respectives supérieure et inférieure, et éventuellement le système comprend d'autres paires de chariots de charge fonctionnant en opposition de phase, de préférence **caractérisé en ce que** les premier et second chariots de charge (12.5), (12.6), et éventuellement les autres paires de chariots de charge sont couplés à un tambour commun (22) au moyen de deux câbles respectifs (18.1), (18.2) ou d'un câble commun (18).

13. Système selon l'une quelconque des revendications 1 à 12, **caractérisé en ce que** la charge unitaire (4, 4', 4") est sensiblement parallélépipédique ou sensiblement cylindrique ou sensiblement en forme de boule et est éventuellement équipée de roulements ou de roues.

14. Méthode pour générer de l'énergie électrique dans un système selon l'une quelconque des revendications 1 à 13, la méthode comprenant les étapes de : maintenir un chariot de charge vide (12) dans une position supérieure (12.2) ; soulever au moins une charge unitaire (4) dans un chariot de chargement (2) au moyen d'un dispositif de récupération d'énergie hydraulique ; décharger la ou les charges unitaires (4) du chariot de chargement (2) dans le chariot de charge (12) ou dans un tampon (6) où la ou les charges unitaires (4) sont retenues ; éventuellement déplacer le chariot de chargement vide (2) dans une position de chargement (2.1), charger le chariot de chargement (2) avec au moins une autre charge unitaire (4) et répéter les étapes de levage et de déchargement comme ci-dessus ; libérer les charges unitaires (4) du tampon optionnel (6.1) dans le chariot de charge (12) ; libérer le chariot de charge (12) de manière à le laisser descendre sous l'action de la gravité ; tirer, au moyen du mouvement du chariot de charge (12), un câble (18) ; faire tourner un tambour (22) au moyen du mouvement du câble (18) ; entraîner un générateur électrique (26) couplé au tambour (22).

15. Méthode selon la revendication 14, où l'étape de levage d'au moins une charge unitaire (4) se fait en fonction de l'énergie hydraulique délivrée et l'étape de libération du chariot de charge (12) est effectuée à la demande et indépendamment de l'étape de levage d'au moins une charge unitaire (4).
